# EUROPEAN PATENT SPECIFICATION

(11) **EP 4 553 316 B1**
(45) Date of publication and mention of the grant of the patent: **22.10.2025**
(21) Application number: 24190625.4
(22) Date of filing: 24.07.2024
(51) Int. Cl.: F03D 3/00, F03D 3/04

(54) **AN INTEGRATED WIND TURBINE ENERGY HARVESTING SYSTEM**
INTEGRIERTES WINDTURBINENENERGIEGEWINNUNGSSYSTEM
SYSTÈME DE COLLECTE D'ÉNERGIE ÉOLIENNE INTÉGRÉ

(30) Priority: 09.11.2023 LV 230110
(43) Date of publication of application: 14.05.2025
(73) Proprietor: Selivanav, Pavel, 1035 Riga (LV)
(72) Inventor: Selivanav, Pavel, 1035 Riga (LV)
(74) Representative: Fortuna, Jevgenijs

(56) References cited:
- WO-A1-2004/109102
- CN-A- 113 027 672
- GB-A- 2 413 829
- US-A1- 2011 037 261
- US-B1- 11 746 751

## Description

### Field of the invention

The present invention pertains to renewable energy systems for vehicles, specifically, to vehicle-integrated wind turbine systems designed to harness and transform wind energy into electrical power, which can be utilized for recharging the vehicle's battery or supplying electric power for the vehicle's additional operational needs.

### Background of the invention

Vehicle-embedded wind turbine systems, which are designed to capture and convert wind energy to recharge the vehicle's battery are known to be eco-friendly, cost-effective and provide additional means of generating electricity.

However, the feasibility and efficiency of such systems depends on design, integration, driving conditions, and other factors. Incorporating wind turbine systems within a vehicle's structure presents challenges in terms of aerodynamic efficiency, weight distribution, and ensuring consistent electricity generation, especially during variable driving speeds and conditions. Minimizing noise and vibration, optimizing energy capture, and maintaining the vehicle's performance and safety concurrently pose significant engineering challenges.

There is known a wind turbine energy tube battery charging system for a vehicle [1]. The known system is designed to be located within a tube structure on the interior of a vehicle and comprises one or more intake ports such that, when the car is in motion, air flows into the intake ports; the intake ports are operatively connected to one or more wind turbines, each wind turbine having a self-contained alternator and blades, the alternator being located interior to the blades. In operation, the airflow from the intake port rotates the blades of the turbine to generate electricity in the alternator, which is used to charge one or more batteries of the vehicle.

There is known a system designed for charging car batteries in electric vehicles by using wind energy [2]. The system comprises a vertical axis wind turbine, a DC generator, a DC power boost converter, and a voltage regulator. There is known an electrical power system comprising a turbine, a turbine housing, an incoming channel, and a generator. The turbine features at least two blades and the housing has at least two openings. The incoming channel directs and amplifies a working fluid flow towards one of the openings, striking the upper portion of the turbine blades. This setup enables the turbine to rotate, thereby generating electrical power via the generator [3]. There is also known a wind-driven generator for automobiles, consisting of air inlet equipment, an air inlet duct, a fan main shaft, fan blades, and a motor part with a motor and a planetary gearbox. The fan components are located at the rear end of the duct, while the air inlet equipment is at the front, connecting to the car engine's air inlet and adjusting based on the car's speed. This setup allows the generator to harness wind energy from the moving car, generating additional electrical power to increase the car's range and reduce dependence on the power grid [4]. Some known background art systems to the present invention are US2011/037261A1, CN113027672A, US11746751B1, WO2004/109102A1 and GB2413829A.

Although the known systems have potential advantages, they also have design, efficiency and operational challenges. For instance, the systems' efficiency is potentially compromised at low vehicle speeds.

### Brief summary of the invention

The goal of the invention is to provide an integrated wind turbine energy harvesting system for vehicle battery recharging.

The set goal is reached by an integrated wind turbine energy harvesting system, comprising a horizontally oriented, ducted vertical-axis wind turbine, a duct comprising an inlet and an outlet for air flow, an internal cavity designed to house a rotational axis with wind turbine blades. The system further comprises a controllable horizontal airflow guide vanes situated anterior to the inlet, designed for rotational adjustment around the vanes' horizontal axis. The length of the duct from the inlet to the proximal boundary of the wind turbine blades is preferably 50-75% of the span across two opposing blades connected to the rotational axis, inclusive of clearance for blade rotation. According to the preferred embodiment, the inlet of the duct is provided with a diffuser configured to facilitate the acceleration of air flow into the ducted vertical-axis wind turbine. The vanes may be integrated into the vehicle's frontal grille assembly. The rotational axis of the wind turbine extends horizontally and is coupled with electromagnetic alternators, one alternator on each side of the wind turbine axis; wherein the wind turbine axis is supported by four bearings, with each alternator positioned between two bearings. The ratio of the rotational axis diameter to the height of the blades is 12-17%. The duct comprises two parts, an upper and a lower, split along a horizontal plane. The upper part of the duct being shaped substantially as an open rectangular prism with an arch-shaped protrusion at its top. The arch-shaped protrusion configured to provide a clearance around the blade tips; and the lower part of the duct having semi-cylindrical shape, adapted to house the lower half of the wind turbine and support the wind turbine axis with the blades.

According to the preferred embodiment, the system further comprising two planetary gear reducers, aligned with the rotational axis of the wind turbine, where the electromagnetic alternators are coupled to the rotational axis of the wind turbine through the planetary gear reducers, wherein each planetary gear reducer is positioned adjacent to one of the two alternators, enabling enhanced torque output for its respective alternator.

### Brief description of the drawings

Fig. 1 shows a schematic left side cross-sectional view of the claimed system;
Fig. 2 - a schematic top side cross-sectional view of the claimed system;
Fig. 3 - a schematic view of the wind turbine axis with blades, supported by four bearings and having two alternators;
Fig. 4 - a schematic view of another embodiment showing the wind turbine axis with blades, supported by four bearings and having two alternators coupled to the wind turbine axis through the planetary gear reducers.

### Detailed description of the invention

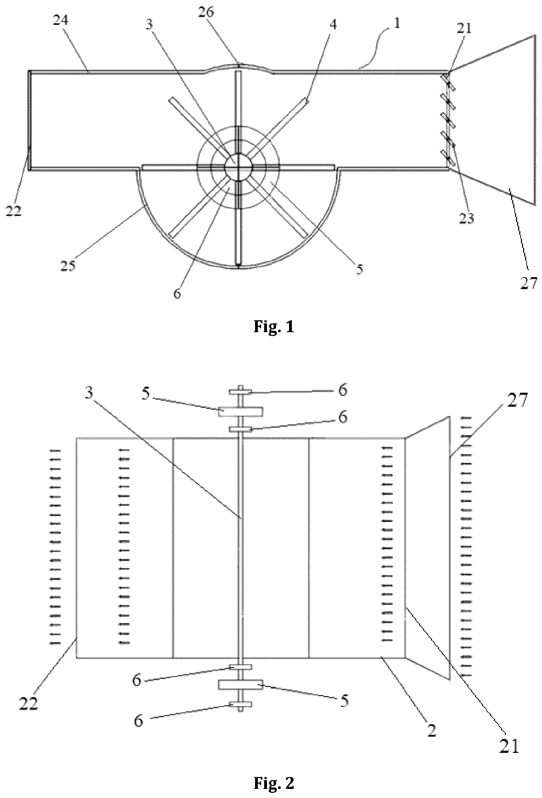

The claimed integrated wind turbine energy harvesting system comprises an integrated wind turbine energy harvesting system (1), comprising a horizontally oriented, ducted vertical-axis wind turbine (Fig. 1 and 2), a duct (2) comprising an inlet (21) and an outlet (22) for air flow, an internal cavity designed to house a rotational axis (3) with wind turbine blades (4). The length of the duct (2) from the inlet (21) to the proximal boundary of the wind turbine blades (4) is preferably defined to be 50-75% of the span across two opposing blades (4) connected to the rotational axis (3), inclusive of clearance for blade (4) rotation. According to the preferred embodiment, the inlet (21) of the duct (2) is provided with a diffuser (27) configured to facilitate the acceleration of air flow into the ducted vertical-axis wind turbine.

The preferred number of the wind turbine blades (4) is from six to eight. The preferred ratio of the rotational axis (3) diameter to the height of the blades (4) is about 12-17%, meaning that if the rotational axis (3) diameter is 50 mm, the total width of the two co-axial blades (4) would range from approximately 294 mm (for 17%) to 416 mm (for 12%). If the total width of the two co-axial blades (4) is 1000 mm, the rotational axis (3) diameter would range from 120 mm (12% of 1000 mm) to 170 mm (17% of 1000 mm). The blades (4) are substantially rectangular in shape, with the width or height of the blade (4) being less than its length, which is the side adjoining the axial (3). The width of the blades (4) is anticipated to range from 150 mm to 500 mm, with blade lengths ranging from 500 mm to 1800 mm. The blade (4) surface opposite to the plane of attachment to the rotational axis (3) has substantially a rounded, arcuate shape to reduce vortex flows within the device and to minimize the gap between the blades (4) and the inner part of the duct (2).

The system (1) further comprises a controllable horizontal airflow guide vanes (23) situated anterior to the inlet (21), designed for rotational adjustment around the vanes' (23) horizontal axis. The controllable horizontal airflow guide vanes (23) may be integrated into the vehicle's frontal grille assembly. The horizontal airflow guide vanes (23) may be actuated by servo motors and a controller, permitting control over the volume of air directed towards the blades (4). This helps to effectively direct air flow, augmenting the device's aerodynamics and to prevent mechanical failures due to increased loads.

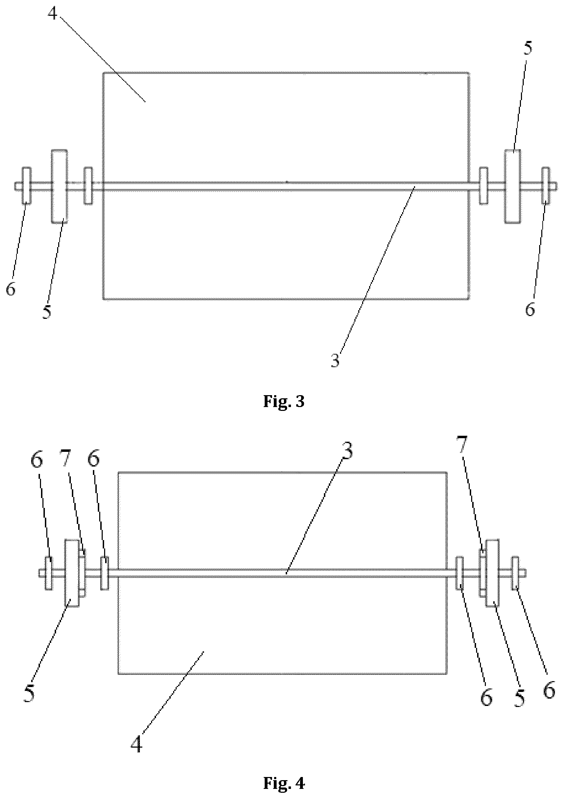

As shown in figures 2 and 3, the rotational axis (3) of the wind turbine extends horizontally and is coupled with electromagnetic alternators (5), one alternator (5) on each side of the wind turbine axis (3). The wind turbine axis (3) is supported by four bearings (6), with each alternator (5) positioned between two bearings (6). The electromagnetic alternators (5) are preferably selected with a power output ranging from 0.2 kW to 50 kW. This variability depends on several factors, including the size of the alternator (5), the number of electromagnets it contains, and the power of the coils. The alternator's (5) rotational speed spans between 100 rpm to 2500 rpm. The operating voltage stands between 200 to 250 V, and the torque ranges from 10 to 250 Newton meters.

The alternators (5) may comprise a speed sensor for monitoring the rotational speed of the alternator's shaft to ensure efficiency and to prevent overspeed conditions that could lead to damage; a torque sensor for measuring the torque output, which is essential for assessing the mechanical load on the alternator and for optimizing performance; a temperature sensor for keeping track of the alternator's (5) internal and external temperatures to prevent thermal overload and to maintain optimal operating conditions; a current sensor for recording the electrical current output, which is critical for evaluating the alternator's (5) electrical performance and ensuring the safety and reliability of the power generation; a voltage sensor for monitoring the output voltage to ensure it stays within required operational parameters, safeguarding both the alternator (5) and the devices it powers a power sensor for measuring the real-time power output, providing data that is crucial for balancing load and supply, and for the efficient management of the power system. The alternators (5) may also comprise a passive or active cooling system, such as heat sinks, thermal conduction plates, ventilation slots or fins, liquid cooling to facilitate its function under high-load conditions. Should the electricity production surpass consumption, the surplus energy may be stored in the battery until its capacity is reached, adhering to slow-charging protocols. For this purpose, two electrical circuits may be provided: one directly powering the electric vehicle and the other dedicated to battery charging.

The duct (2) comprises two parts, an upper (24) and a lower (25), split along a horizontal plane (Fig. 1). The upper part (24) of the duct (2) being shaped substantially as an open rectangular prism with an arch-shaped protrusion (26) at its top, the arch-shaped protrusion (26) configured to provide a clearance around the blade (4) tips. The arch-shaped protrusion (26) advantageously directs wind flow more smoothly around the blade (4) tips, reducing turbulence and vortex formation that typically occurs at these points. This results in a more laminar and directed flow of wind towards the turbine, increasing its efficiency. This shape also contributes to creating a Venturi effect, increasing wind speed as it passes through a constricted area. The lower part (25) of the duct having semi-cylindrical shape, adapted to house the lower half of the wind turbine and support the wind turbine axis (3) with the blades (4). The alternators (5) and bearings (6) are accommodated within specifically designed cavities in the lower part (25) of the duct (2), whereas the upper part (24) of the duct is provided with matching cavities to accommodate the upper portions of the alternators (5) and bearings (6). According to an embodiment, the upper (24) and the lower (25) parts are provided with clamps, wherein upon coupling the upper (24) and the lower (25) parts together, the clamps engage to ensure a secure and aligned assembly. The entire duct (2) is further designed to be fixed using external fixtures at designated points.

According to another embodiment (Fig. 4), the system may further comprise two planetary gear reducers (7), aligned with the rotational axis (3) of the wind turbine, where the electromagnetic alternators (5) are coupled to the rotational axis (3) of the wind turbine through the planetary gear reducers (7). Each planetary gear reducer (7) is positioned adjacent to one of the two alternators (5), enabling enhanced torque output for its respective alternator (5). For example, a nominal force at a specific moment in the rotational axis (3) motion of 10 Newton meters is increased tenfold by the planetary gear reducer (7) with a 1:10 ratio, resulting in a force of 100 Newton meters being transferred to the alternator (5). The size and specifications of the planetary gear reducer (7) are selected according to the required technical conditions of the electric vehicle. The reducer (7) has a simple direct mounting system to the rotational axis (3) and to the alternator (5). If necessary, a transition flange can be used for a rigid connection of the components.

### Source of information

[1] US2017342964A1.
[2] Zahir Hussain M. et al. Charging of car battery in electric vehicle by using wind energy, 2021.
[3] US2011/037261A1.
[4] CN113027672A.

## Claims

1. An integrated wind turbine energy harvesting system (1), comprising a horizontally oriented, ducted vertical-axis wind turbine, a duct (2) comprising an inlet (21) and an outlet (22) for air flow, an internal cavity designed to house a rotational axis (3) with wind turbine blades (4);
wherein the system (1) further comprises a controllable horizontal airflow guide vanes (23) located anterior to the inlet (21), designed for rotational adjustment around the vanes' (23) horizontal axis;
wherein the rotational axis (3) of the wind turbine extends horizontally and is coupled with electromagnetic alternators (5), one alternator (5) on each side of the wind turbine axis (3); wherein the wind turbine axis (3) is supported by four bearings (6), with each alternator (5) positioned between two bearings (6); wherein the ratio of the rotational axis (3) diameter to the height of the blades (4) is 12-17%;
wherein the duct (2) comprises two parts, an upper (24) and a lower (25), split along a horizontal plane; wherein the upper part (24) of the duct (2) being shaped substantially as an open rectangular prism with an arch-shaped protrusion (26) at its top, the arch-shaped protrusion (26) configured to provide a clearance around the blade (4) tips; and the lower part (25) of the duct having semi-cylindrical shape, adapted to house the lower half of the wind turbine and support the wind turbine axis (3) with the blades (4);
wherein the wind turbine blade (4) surface opposite to the plane of attachment to the rotational axis (3) has substantially a rounded, arcuate shape.

2. The system of claim 1, further comprising two planetary gear reducers (7), aligned with the rotational axis (3) of the wind turbine, where the electromagnetic alternators (5) are coupled to the rotational axis (3) of the wind turbine through the planetary gear reducers (7), wherein each planetary gear reducer (7) is positioned adjacent to one of the two alternators (5), enabling enhanced torque output for its respective alternator (5).

3. The system of any preceding claims, wherein the length of the duct (2) from the inlet (21) to the proximal boundary of the wind turbine blades (4) is defined to be 50-75% of the span across two opposing blades (4) connected to the rotational axis (3), inclusive of clearance for blade (4) rotation.

4. The system of any preceding claims, wherein the number of the wind turbine blades (4) is from six to eight.

5. The system of any preceding claims, wherein the inlet (21) of the duct (2) is provided with a diffuser (27) configured to facilitate the acceleration of air flow into the ducted vertical-axis wind turbine.

## Patentansprüche

1. Ein integriertes Windrad-Energiegewinnungssystem (1), bestehend aus einem horizontal ausgerichteten Windrad mit vertikaler Achse und Luftkanal, einem Luftkanal (2) mit einem Einlass (21) und einem Auslass (22) für den Luftstrom, einem Innenraum zur Aufnahme einer Drehachse (3) mit Windrad-Rotorblättern (4). Das System (1) umfasst ferner ein steuerbares horizontales Luftleitblech (23), das vor dem Einlass (21) angebracht ist und zur Drehverstellung um die horizontale Achse des Luftleitbleches (23) konzipiert ist.
Die Drehachse (3) des Windrads erstreckt sich dabei horizontal und ist mit elektromagnetischen Wechselstromgeneratoren (5) gekoppelt, wobei sich auf jeder Seite der Windradachse (3) ein Wechselstromgenerator (5) befindet. Die Windradachse (3) wird dabei von vier Lagern (6) getragen. Jeder Wechselstromgenerator (5) befindet sich zwischen zwei Lagern (6) und das Verhältnis des Durchmessers der Drehachse (3) zur Höhe der Rotorblätter (4) beträgt 12-17 %.
Der Luftkanal (2) besteht aus zwei Teilen, einem oberen (24) und einen unteren (25), die entlang einer horizontalen Ebene geteilt sind, wobei der obere Teil (24) des Luftkanals (2) im Wesentlichen als offenes rechteckiges Prisma mit einem bogenförmigen Vorsprung (26) an seiner Oberseite geformt ist. Der bogenförmige Vorsprung (26) ist so beschaffen, dass er einen Freiraum um die Spitzen der Rotorblätter (4) herum schafft und der untere Teil (25) des Luftkanals eine halbzylindrische Form aufweist, die dazu ausgelegt ist, die untere Hälfte des Windrads aufzunehmen und die Windradachse (3) mit den Rotorblättern (4) zu stützen.
Die Oberfläche der Windrad-Rotorblätter (4), die der Ebene der Befestigung an der Drehachse (3) gegenüberliegt, weist im Wesentlichen eine abgerundete, bogenförmige Form auf.

2. System gemäß Patentanspruch 1, das außerdem zwei Planetengetriebe (7) enthält, die an der Drehachse (3) des Windrads ausgerichtet sind. Dabei sind die elektromagnetischen Wechselstromgeneratoren (5) über die Planetengetriebe (7) mit der Drehachse (3) des Windrads gekoppelt und jedes Planetengetriebe (7) ist benachbart zu einem der beiden Wechselstromgeneratoren (5) positioniert, wodurch eine verbesserte Drehmomentabgabe für den jeweiligen Wechselstromgenerator (5) ermöglicht wird.

3. System gemäß allen vorhergehenden Patentansprüchen, wobei die Länge des Luftkanals (2) vom Einlass (21) bis zur proximalen Begrenzung der Windrad-Rotorblätter (4) auf 50 bis 75 % der Spannweite zwischen zwei gegenüberliegenden, mit der Drehachse (3) verbundenen Rotorblättern (4) festgelegt ist, einschließlich des Freiraums für die Drehung der Rotorblätter (4).

4. System gemäß allen vorhergehenden Patentansprüchen, wobei die Anzahl der Windrad-Rotorblätter (4) von sechs bis acht reicht.

5. System gemäß allen vorhergehenden Patentansprüchen, wobei der Einlass (21) des Luftkanals (2) mit einem Diffusor (27) versehen ist, der so beschaffen ist, dass er die Beschleunigung des Luftstroms in das vertikale Windrad mit Luftkanal erleichtert.

## Revendications

1. Système (1) intégré de récupération d'énergie de turbine éolienne, comprenant une turbine éolienne à axe vertical à conduit, orientée horizontalement, un conduit (2) comprenant une entrée (21) et une sortie (22) destinées à un écoulement d'air, une cavité interne conçue pour loger un axe de rotation (3) avec des pales (4) de turbine éolienne ;
dans lequel le système (1) comprend en outre des aubes (23) directrices de flux d'air horizontales commandables localisées antérieures à l'entrée (21), conçues pour un ajustement rotatif autour de l'axe horizontal des aubes (23) ;
dans lequel l'axe (3) de rotation de la turbine éolienne s'étend horizontalement et est accouplé à des alternateurs (5) électromagnétiques, un alternateur (5) sur chaque côté de l'axe de turbine éolienne (3) ; dans lequel l'axe (3) de turbine éolienne est supporté par quatre paliers (6), chaque alternateur (5) étant positionné entre deux paliers (6) ; dans lequel le rapport du diamètre de l'axe (3) de rotation à la hauteur des pales (4) va de 12 à 17 % ;
dans lequel le conduit (2) comprend deux parties, une supérieure (24) et une inférieure (25), séparées le long d'un plan horizontal ; dans lequel la partie supérieure (24) du conduit (2) est mise en forme sensiblement en tant que prisme rectangulaire ouvert avec une partie saillante en forme d'arc (26) au niveau de sa partie supérieure, la partie saillante en forme d'arc (26) étant conçue pour fournir un dégagement autour des pointes des pales (4) ; et la partie inférieure (25) du conduit a une forme semi-cylindrique, adaptée pour loger la moitié inférieure de la turbine éolienne et supporter l'axe (3) de turbine éolienne avec les pales (4) ;
dans lequel la surface des pales (4) de turbine éolienne opposée au plan de fixation à l'axe (3) de rotation a sensiblement une forme arquée arrondie.

2. Système selon la revendication 1, comprenant en outre deux réducteurs planétaires (7), alignés avec l'axe (3) de rotation de la turbine éolienne, où les alternateurs électromagnétiques (5) sont accouplés à l'axe (3) de rotation de la turbine éolienne par le biais des réducteurs planétaires (7), dans lequel chaque réducteur planétaire (7) est positionné adjacent à l'un des deux alternateurs (5), permettant une sortie de couple améliorée pour son alternateur (5) respectif.

3. Système selon de quelconques revendications précédentes, dans lequel la longueur du conduit (2) allant de l'entrée (21) à la limite proximale des pales (4) de turbine éolienne est définie comme étant 50 à 75 % de l'envergure à travers deux pales (4) opposées reliées à l'axe (3) de rotation, y compris un dégagement pour une rotation de la pale (4).

4. Système selon de quelconques revendications précédentes, dans lequel le nombre des pales de turbine éolienne (4) va de six à huit.

5. Système selon de quelconques revendications précédentes, dans lequel l'entrée (21) du conduit (2) est pourvue d'un diffuseur (27) conçu pour faciliter l'accélération d'écoulement d'air dans la turbine éolienne à axe vertical à conduit.
